# EUROPÄISCHE PATENTSCHRIFT

(11) **EP 2 022 663 B1**
(45) Veröffentlichungstag und Bekanntmachung des Hinweises auf die Patenterteilung: **14.03.2012**
(21) Anmeldenummer: 08014116.1
(22) Anmeldetag: 07.08.2008
(51) Int. Cl.: B60N 2/28

(54) **Kindersitz zum Einbau in ein Fahrzeug entgegen dessen Fahrtrichtung**
Child seat for fitting in a car in a direction opposite to travel
Siège pour enfants à installer dans un véhicule dans le sens opposé à la direction de marche

(30) Priorität: 08.08.2007 DE 102007037402; 09.10.2007 DE 102007048406
(43) Veröffentlichungstag der Anmeldung: 11.02.2009
(73) Patentinhaber: Recaro GmbH & Co. KG, 73230 Kirchheim/Teck (DE)
(72) Erfinder: Pöhner, Jens, D-95346 Stadtsteinach (DE); Hoffmann, Hans Peter, D-95352 Marktleugast (DE)
(74) Vertreter: Daub, Thomas

(56) Entgegenhaltungen:
- EP-A- 0 841 209
- EP-A- 0 878 347
- WO-A-00/58124
- WO-A-85/00563
- WO-A-2004/002773
- DE-U1-202004 017 276

## Beschreibung

Die Erfindung richtet sich auf einen entgegen der Fahrtrichtung in ein Fahrzeug einbaubaren, auf einem fahrzeugeigenen Sitz aufsetzbaren Kindersitz, mit einer Sitzfläche, an deren in Sitzrichtung rückwärtiger Kante sich eine Lehne, ggf. samt Kopfstütze, anschließt, sowie ggf. mit seitlichen Ohr-, Arm- und/oder Rumpflehnen und mit einem über die in Sitzrichtung vordere, freie Kante der Sitzfläche überstehenden Bügel zur Abstützung der Vorderseite des Kindersitzes in einem Abstand vor der Rücklehne des fahrzeugeigenen Sitzes, wobei der Abstandsbügel verstellbar ist, insbesondere um eine quer zur Fahrtrichtung verlaufende Achse verschwenkbar.

Ein großer Anteil von Unfällen ist mit einer plötzlichen Verzögerung des betreffenden Fahrzeugs verbunden, wobei die auf die Insassen einwirkenden Trägheitskräfte bestrebt sind, dieselben innerhalb des verzögerten Fahrzeugs nach vorne, also in Fahrtrichtung zu bewegen. Die übliche Gegenmaßnahme sind Sicherheitsgurte für Erwachsene, insbesondere aber auch für Kinder. Gerade Kinder versuchen jedoch häufig, sich des störenden Gurtes zumindest teilweise zu entledigen und wenigstens aus den Schultergurten herauszuschlüpfen, um ihre Bewegungsfreiheit zu erhöhen. Dadurch steigt jedoch im Falle eines Unfalls die Gefahr von ernsthaften Verletzungen im Bauchbereich erheblich an. Deshalb bevorzugen manche Eltern die Verwendung solcher Kindersitze in ihrem Auto, welche entgegen der Fahrtrichtung eingebaut werden können, weil solchenfalls bei einem Frontalaufprall die Rückenlehne des Kindersitzes den Körper des Kindes zuverlässig abfängt, selbst wenn das Kind nicht völlig ordnungsgemäß angeschnallt sein sollte. Derartige Kindersitze sind in einigen Staaten, bspw. in Schweden, sogar vorgeschrieben.

Im Gegensatz zu vergleichsweise kleinen und niedrigen Babyschalen bringt der richtungsverkehrte Einbau von Kindersitzen für ältere Kinder auf den Rücksitzen eines Fahrzeugs einige Besonderheiten mit sich. Eine erste Besonderheit besteht darin, dass der Kindersitz nicht ganz an die Lehne des fahrzeugeigenen Sitzes herangerückt werden darf, damit das Kind ausreichenden Platz für seine Beine vorfindet; dies ist bei Babyschalen von geringerer Bedeutung, weil die Beine der Babys nicht über die Schalenkante ragen. Ein weiterer Gesichtspunkt ist die ausreichende Stabilisierung des Kindersitzes gegenüber dem Fahrzeug. Denn einerseits fehlt in diesem Fall ein inniger Kontakt zwischen der Lehne des Kindersitzes und der Lehne des fahrzeugeigenen Sitzes völlig. Andererseits ist der Schwerpunkt eines in dem Kindersitz sitzenden Kindes viel weiter von der Rückenlehne des fahrzeugeigenen Sitzes entfernt als bei den üblichen Kindersitzen, und ist zudem auch schwerer als bei einer Babyschale samt Baby. Daher könnte ein entgegen der Fahrtrichtung eingebauter Kindersitz - bei entsprechenden Beschleunigungen des Fahrzeugs - sowohl nach hinten kippen - in Richtung zu der fahrzeugeigenen Rückenlehne - als auch nach vorne - unter vorübergehendem Zusammenpressen der gepolsterten Sitzfläche des fahrzeugeigenen Sitzes.

Aus diesem Grund ist in der DE 20 2004017 276 U1 bereits ein Bügel vor der Vorderkante der Sitzfläche vorgeschlagen worden, der in einem Abstand vor der Sitzfläche nach oben umgebogen ist. Dieser kann mit einer Spindel aus der Sitzfläche herausgekurbelt werden; beim Betrieb des Fahrzeugs werden jedoch vom Motor Vibrationen erzeugt und auf das Fahrzeugchassis übertragen, wodurch sich diese Spindel in unerwünschter Weise selbsttätig verstellen könnte, so dass sie nicht in der Lage ist, ihre Aufgabe - die Abstützung des Sitzes an der Rückenlehne des fahrzeugeigenen Sitzes - zuverlässig zu erfüllen.

Aus der WO 2004/002773 ist ein Kindersitz mit den Merkmalen des Oberbegriffs des Anspruchs 1 bekannt.

Aus diesen Nachteilen des beschriebenen Standes der Technik resultiert das die Erfindung initiierende Problem, eine gattungsgemäße Abstützvorrichtung derart weiterzubilden, dass sie ihre Aufgabe dauerhaft zuverlässig erfüllt. Dabei soll ein bevorzugtes Augenmerk auf Kindersitze für ältere Kinder gerichtet werden, bei welchen die Beine des Kindes - insbesondere dessen Knie, Unterschenkel und Füße - über die Sitzvorderkante hervor ragen. Solche Kindersitze unterscheiden sich von Babyschalen zumeist dadurch, dass sie - aufgrund des Gewichts eines darin sitzenden Kindes - nicht mehr zum manuellen Tragen des Kindes geeignet sind und aus diesem Grund auch über keinen verschwenkbaren Tragbügel verfügen.

Die Lösung dieses Problems gelingt durch einen Kindersitz mit den Merkmalen des Anspruchs 1.

Dieser Abstandsbügel liegt selbst an der Rückenlehne des fahrzeugeigenen Sitzes an und stützt sich und damit auch den damit verbundenen Kindersitz daran ab, so dass einerseits Platz für die Beine des Kindes geschaffen ist und andererseits ein Kippen des Kindersitzes in Richtung zu der Lehne des fahrzeugeigenen Sitzes ausgeschlossen ist. Zu diesem Zweck liegt der Abstandsbügel an der Rückenlehne des Fahrzeugsitzes nicht nur in deren unteren Bereich an, sondern auch in ihrem oberen Bereich, zumindest etwa bis zur halben Höhe der Lehne des Fahrzeugsitzes, während andererseits der Kindersitz mit seiner Unterseite auf dem Sitzpolster des Fahrzeugsitzes aufsteht. Da bei unterschiedlichen Fahrzeugtypen der mittlere Winkel zwischen Lehne und Sitzfläche eines Sitzes variiert und teilweise sogar einstellbar ist, ist der Abstandsbügel einstellbar und kann dadurch den unterschiedlichen Typen von Fahrzeugsitzen angepaßt werden. Schließlich bewirkt die Feststell- bzw. Einrastfunktion, dass eine optimal eingestellte Position des Abstandsbügels sich nicht selbsttätig erstellen kann. Dabei ist zu beachten, dass der Abstandsbügel mit dem Sitzpolster des Fahrzeugsitzes nur in Druckrichtung Kräfte überträgt, in Zugrichtung jedoch nicht. Deshalb ist es nicht erforderlich, den Abstandsbügel in seinen beiden möglichen Bewegungsrichtungen - zu dem Sitzpolster hin und von diesem weg - festzulegen bzw. zu arretieren; es genügt vielmehr, wenn eine Stauchung bzw. ein Heranschwenken an die Vorderkante des Kindersitzes beim Einwirken äußerer Druckkräfte unmöglich gemacht ist; für ein selbsttätiges Ausfahren bzw. Wegschwenken des Abstandsbügels fehlen einerseits die dafür erforderlichen, äußeren Zugkräfte; andererseits wäre eine derartige Bewegung auch unkritisch, weil dadurch der Kindersitz anschließend nur noch um so stärker an die Rückenlehne des Fahrzeugsitzes gepreßt würde.

Indem der Abstandsbügel um eine quer zur Fahrtrichtung verlaufende Achse verschwenkbar ist, kann sein Neigungswinkel gegenüber der Unterseite bzw. Aufstandsfläche des Kindersitzes variiert werden entsprechend an die unterschiedlichen Zwischenwinkel zwischen Rückenlehne und Sitzpolster bei verschiedenen Fahrzeugsitzen angepaßt werden.

Hierbei ist es vorteilhaft, wenn die Schwenkachse sich nahe einer unterseitigen Aufstandsfläche des Kindersitzes befindet, und/oder etwa unterhalb der Vorderkante des Kindersitzes. Damit liegt die Schwenkachse in der Nähe desjenigen Bereichs, wo sich Rückenlehne und Sitzpolster des Fahrzeugsitzes treffen. Dies hat den Vorteil, dass der Abstandsbügel bei jeder Art von Fahrzeugsitz etwa parallel an die Rückenlehne heranschwnkbar ist, um sich einerseits vollflächig und andererseits ohne übermäßige lokale Pressung daran abstützen zu können.

Es hat sich als günstig erwiesen, dass sich die Schwenkachse zwischen zwei unterseitigen, kufenartigen Seitenschilden des Kindersitz-Chassis erstreckt. Hier läßt sich die Schwenkachse fest an dem Chassis des Kindersitzes verankern, und in Anbetracht der erhöhten Länge der Schwenkachse, welche etwa der Breite des Kindersitzes entspricht, ist genügend Platz, um den Abstandsbügel an mehreren, seitlich gegeneinander versetzten Punkten mit der Schwenkachse zu verbinden oder an dieser zu lagern, so dass eine Verwindung des Abstandsbügels selbst bei starken seitlichen Belastungen nicht zu befürchten ist. Vorzugsweise ist der Abstand zwischen zwei seitlich gegeneinander versetzten Verbindungs- oder Anlenkpunkten der Schenkelenden an der Schwenkachse kleiner als die Breite der Sitzfläche zwischen den Innenseiten der beiden Armlehnen, vorzugsweise um wenigstens 5 cm kleiner als die lichte Sitzbreite, insbesondere um wenigstens 10 cm kleiner als die lichte Sitzbreite.

Die Schwenkachse und/oder der Abstandsbügel können als Rohr ausgebildet sein, um Gewicht zu ersparen, ohne jedoch die Stabilität des betreffenden Bauteils zu schwächen.

Bevorzugt sind die beiden Enden des Abstandsbügels mit der vorzugsweise rohrförmigen Schwenkachse verbunden, bspw. angeschweißt. Dadurch überträgt sich der Schwenkwinkel des Abstandsbügels auf die Schwenkachse, so dass bspw. eine Arretierungseinrichtung mit der Schwenkachse verbunden werden kann. Die Schwenkachse selbst ist in diesem Fall im Bereich ihrer Enden drehbar mit dem Kindersitz-Chassis verbunden, bspw. über einfache Gleitlager, insbesondere mittels in eine rohrförmige Schwenkachse eingreifender Achsstummel, die am Chassis des Kindersitzes festgelegt sind.

Die Erfindung empfiehlt, dass sich der Abstandsbügel von seinem Befestigungs- oder Anlenkpunkt, insbesondere von der Schwenkachse, aus gesehen zunächst etwa horizontal in Sitzrichtung nach vorne erstreckt. Dieser Abschnitt des Abstandsbügels folgt etwa dem rückwärtigen Bereich des fahrzeugeigenen Sitzpolsters. Die Länge dieses Abschnittes, in Fahrtrichtung gesehen, beeinflußt den Abstand zwischen der freien Vorderkante der Sitzfläche des Kindersitzes und der Rückenlehne des Fahrzeugsitzes und bestimmt daher maßgeblich den Bewegungsfreiraum für die Beine des Kindes, insbesondere für dessen Knie, Unterschenkel und Füße. Dieser Abschnitt sollte daher etwa der Summe aus dem gewünschten Abstand zwischen der Lehne des Fahrzeugsitzes und der freien Vorderkante der Sitzfläche des Kindersitzes einerseits und dem horizontalen Abstand zwischen eben dieser freien Vorderkante der Sitzfläche des Kindersitzes und der Schwenkachse entsprechen.

In einem Abstand vor der freien Vorderkante der Sitzfläche ist der Abstandsbügel aufwärts umgebogen und folgt ab diesem Bereich sodann der Rückenlehne des Fahrzeugsitzes, um sich dort anzuschmiegen bzw. abzustützen. Vorzugsweise hat die Umbiegung einen verhältnismäßig großen Biegeradius von etwa 5 bis 30 cm, insbesondere etwa 10 bis 20 cm, um den Rohrquerschnitt in diesem Bereich nicht zu verformen. Der Scheitel der Biegung befindet sich vor der Vorderkante der Sitzfläche des Kindersitzes, vorzugsweise wenigstens 4 cm vor der Sitzvorderkante, insbesondere wenigstens 8 cm vor der Sitzvorderkante.

Insgesamt sollte der Umbiegungswinkel des Abstandsbügels etwa gleich 90° sein oder größer, vorzugsweise gleich 95° oder mehr, insbesondere gleich 100° oder mehr, und andererseits 140° oder weniger, insbesondere 130° oder weniger. Damit berücksichtigt die Erfindung die Tatsache, dass die Rückenlehne eines Fahrzeugsitzes zumeist etwas nach hinten geneigt ist, um eine bequeme Sitzposition zu ermöglichen.

Weiterhin sieht die Erfindung vor, dass sich der Abstandsbügel nach oben bis etwa auf Höhe der Oberkante seitlicher Armlehnen erstreckt. Da der Schwerpunkt eines in dem Kindersitz sitzenden Kindes etwa im Beckenbereich liegt, also etwa auf Höhe der Armlehnen, ragt der Abstandsbügel demnach etwa bis zum Schwerpunkt des Kindes samt Kindersitz nach oben und kann eine entsprechende Beschleunigungskraft von Drehmomenten nahezu frei in die Rückenlehne des Fahrzeugsitzes einleiten.

An seinem obersten, peripheren Ende verfügt der Abstandsbügel über einen Abschnitt, der einem etwa horizontalen, näherungsweise gerade gestreckten, vorzugsweise quer zur Fahrtrichtung gerichteten Verlauf folgt. Diesem obliegt es, ggf. stärkere Beschleunigungskräfte über einen entsprechenden Bereich zu verteilen und mit reduzierter Druckbelastung in die Rückenlehne des Fahrzeugsitzes einzuleiten. Dabei entspricht dieser obere Abschnitt des Abstandsbügels dem Mittelsteg des insgesamt etwa U-förmigen Bügels, welcher seine beiden Schenkel miteinander verbindet. Aufgrund der Gesamtkonstruktion kann das oberste, periphere Ende des Abstandsbügels niemals deutlich höher gelangen als die Oberkante der Armlehnen, vorzugsweise nicht mehr als 10 cm über das Niveau der Oberkanten der Armlehnen, insbesondere nicht mehr als (etwa) 5 cm über das Niveau der Oberkanten der Armlehnen. Da der Abstand d₁ zwischen dem obersten, peripheren Ende des Abstandsbügels und dessen Schwenkachse kleiner ist als der Abstand d₂ zwischen letzterer und dem obersten, peripheren Ende der Rückenlehne, wäre es niemals möglich, den Abstandsbügel über die Rückenlehne des Kindersitzes hinwegzuschwenken. Vorzugsweise gilt: d₁ ≤ ¾ * d₂, oder: d₁ ≤ 2/3 * d₂.

Die beiden Schenkel des Abstandsbügels konvergieren ihrerseits - von dessen obersten bzw. freien, peripheren Ende her betrachtet - zunächst aufeinander zu, bis etwa in den Bereich einer Umbiegung von einem etwa vertikalen Abschnitt in einen etwa horizontalen Abschnitt. Damit wird der Abstandsbügel von oben nach unten gesehen zunehmend schlanker und läßt im Bereich seiner Umbiegung viel Platz für die Füße des betreffenden Kindes.

Etwa im Bereich der Umbiegung zwischen dem etwa vertikalen Abschnitt und dem etwa horizontalen Abschnitt weisen die beiden Schenkel des Abstandsbügels einen minimalen gegenseitigen Abstand auf und divergieren von dort aus bis zu der Schwenkachse wieder voneinander, so dass die Anschluß- und/oder Verbindungspunkte mit der Schwenkachse vergleichsweise weit voneinander entfernt sind, bspw. 20 bis 30 cm, wodurch der Abstandsbügel insgesamt eine hohe Stabilität erhält und insbesondere äußerst verwindungssteif ist.

An der Schwenkachse ist ferner ein dem horizontalen Abschnitt des Abstandsbügels etwa gegenüberliegender Verstellhebel angeordnet, insbesondere drehfest und/oder starr mit der Schwenkachse verbunden, vorzugsweise mit dieser verschweißt. Während demnach die Schwenkachse sämtliche Kräfte des Abstandsbügels aufnimmt, mit Ausnahme der Drehmomente um eben diese Schwenkachse, obliegt es dem Verstellhebel, diese Drehmomente an das Chassis des Kindersitzes abzuleiten. Der Verstellhebel kann als gerade gestrecktes Hohlprofil ausgebildet sein, vorzugsweise mit einem länglichen, aufrecht stehenden Querschnitt, so dass die seitlichen, vorzugsweise ebenen und zueinander parallelen Flächen des Profils ggf. auch höhere Drehmomente um die Schwenkachse verformungsfrei übertragen können. Zur Verbindung mit der Schwenkachse kann dieses Profil zwei miteinander fluchtende Bohrungen oder Ausnehmungen aufweisen, vorzugsweise in den geraden, zueinander parallelen Abschnitten, durch welche die Schwenkachse hindurchgesteckt ist. Im Rahmen der Verbindung dieser beiden Teile ergeben sich solchenfalls zwei Schweißnähte, die jeweils dem Verlauf eines ebenen Kreises folgen und leicht herzustellen sind.

Die Verbindung des Verstellhebels mit der Schwenkachse befindet sich vorzugsweise zwischen den Verbindungs- oder Anlenkpunkten der beiden Schenkel des Abstandsbügels mit der Schwenkachse, so dass von dem Verstellhebel Kräfte etwa symmetrisch zu den beiden Schenkeln des Abstandsbügels übertragen werden können. Im Grenzfall könnte der Verbindungs- oder Anlenkpunkt des Verstellhebels mit/an der Schwenkachse mit dem Verbindungs- oder Anlenkpunkt eines Schenkels des Abstandsbügels fluchten bzw. zusammenfallen.

Vorzugsweise verläuft der Verstellhebel etwa parallel zu der Sitzrichtung, insbesondere entlang bzw. nahe oder innerhalb der vertikalen Symmetrieebene des Kindersitzes. Mit großem Vorteil erstreckt sich der Verstellhebel etwa horizontal in Fahrtrichtung; dabei findet er unterhalb der Unterseite der Sitzfläche Platz und Bewegungsfreiheit, um bei Bedarf in begrenztem Ausmaß verschwenkt werden zu können. Er sollte etwa bis unter die Rückenlehne reichen, so dass er bei eingebautem Sitz unterhalb der dann in Fahrtrichtung nach vorne weisenden Rückenlehne bequem zugänglich ist.

Bevorzugt reicht das freie Ende des Verstellhebels bis hinter eine Ebene, die von zwei Anschlagelementen aufgespannt wird, insbesondere von zwei zueinander parallelen, quer zur Fahrtrichtung verlaufenden Streben, welche zwei unterseitige Seitenschürzen und/oder kufenartige Aufstandsflächen des Kindersitzes miteinander verbinden. Diese solchermaßen am Chassis des Kindersitzes verankerten Anschlagelemente bzw. Streben begrenzen die mögliche Schwenkbewegung des Verstellhebels und damit des damit gekoppelten bzw. verbundenen Abstandsbügels in beide Schwenkrichtungen. Der zulässige Schwenkbereich des Verstellhebels zwischen diesen beiden Anschlagelementen bzw. Streben ist sehr klein, bspw. 60° oder kleiner, vorzugsweise 45° oder kleiner, insbesondere (etwa) 30° oder kleiner. Aufgrund dieses eng bemessenen Schwenkwinkels ist es dem vorderen bzw. freien Ende des Abstandsbügels nicht möglich, über den Sitz selbst zu schwenken; der Abstandsbügel bleibt vielmehr stets vor dem Kindersitz. Dadurch ist das Aus- und Einsteigen eines Kindes bzw. dessen Hineinsetzen in den Kindersitz erleichtert, weil der Abstandsbügel stets herabgeschwenkt bleibt und auch die Beine des Kindes nicht übergreift, allenfalls die Fußspitzen eines Kindes. Andererseits könnte der erfindungsgemäße Abstandsbügel daher niemals als über den Sitz schwenkbarer Tragebügel verwendet werden, bspw. um nach Art einer Babyschale ein auf dem Kindersitz befindliches Kind mitsamt des Sitzes zu tragen; dies ist aber auch gar nicht beabsichtigt, da ältere Kinder hierfür ohnehin zu schwer sind. Einen über den Sitz schwenkbaren Tragebügel gibt es daher bei dem erfindungsgemäßen Kindersitz nicht.

Indem der Verstellhebel im Bereich seines freien Endes gegenüber dem Chassis des Kindersitzes in verschiedenen Positionen feststellbar ist, kann der Neigungswinkel des Abstandsbügels gegenüber der Unterseite des Kindersitzes je nach Bedarf vorgegeben bzw. eingestellt werden.

Dieser Feststellung des Verstellhebels dient ein Teil desselben zum Eingriff und/oder Einrasten in eine oder mehrere Ausnehmungen am Chassis des Kindersitzes. Vorzugsweise handelt es sich hierbei um wenigstens einen Fortsatz des Verstellhebels, der beispielsweise etwa radial gegenüber der Längsachse des Feststellhebels gerichtet sein kann. Aus Gründen einer symmetrischen Kraftableitung können auch zwei derartige Fortsätze vorgesehen sein, vorzugsweise einander - bezüglich der Längsachse des Verstellhebels - etwa diametral gegenüberliegend, insbesondere in einer gemeinsamen Flucht liegend.

Das Pendant zum Einrasten wenigstens eines Teils, insbesondere Fortsatzes, des Verstellhebels bildet eine am Chassis des Kindersitzes verankerte, etwa tangential zur Schwenkachse bis bogenförmig um die Schwenkachse verlaufende Reihe von Ausnehmungen, Vertiefungen od. dgl., worin wenigstens ein Teil, insbesondere Fortsatz, des Verstellhebels in unterschiedlichen Positionen desselben eingreifen und/oder einrasten kann. Da die Länge des Verstellhebels etwa der Tiefe des Kindersitzes in Fahrtrichtung entspricht, andererseits der erforderliche Verstellwinkel nur wenige Grad beträgt, kann diese Reihe ggf. völlig gerade ausgebildet sein, obwohl sie funktionstechnisch gesehen einem Kreisbogen um die Schwenkachse folgen sollte, dessen Radius etwa der Länge des Verstellhebels entspricht.

Wenigstens eine Reihe solcher Ausnehmungen läßt sich an einem länglichen oder langgestreckten Element mit einem etwa oder überwiegend vertikalen Verlauf anordnen. Diese Ausrichtung resultiert aus dem etwa horizontalen Verlauf des Verstellhebels und der dazu lotrechten Orientierung der Ausnehmungsreihe.

Da sich - wie die Erfindung weiterhin vorsieht - die Verzahnungs- oder Ausnehmungsreihe im Bereich des freien Endes des Verstellhebels befindet und damit etwa um die Länge dieses Verstellhebels von der Schwenkachse entfernt ist, dient dieser Abstand als vergleichsweise langer Hebel, der - bei insgesamt gleichem Drehmoment - die kräftemäßige Belastung der Zähne oder Ausnehmungen auf einen Bruchteil minimiert, so dass auch bei heftigen Stößen - insbesondere bei einem Autounfall - die Zähne nicht brechen bzw. die Ausnehmungen nicht ausreißen können und statt dessen die einmal eingestellte Position des Abstandsbügels zuverlässig eingehalten bleibt. Der ausschlaggebende Faktor hierfür ist die hohe Entfernung der Verzahnungs- oder Ausnehmungsreihe von der Schwenkachse - beispielsweise 10 cm oder mehr, vorzugsweise 15 cm oder mehr, insbesondere 20 cm oder mehr.

Alle von dem Abstandsbügel über die Schwenkachse auf den Verstellhebel übertragenen Drehmomente werden bei der Einleitung in das längliche oder langgestreckte Element über einen Rast- oder Eingriffsmechanismus in Kräfte transformiert, die überwiegend oder ausschließlich in Längsrichtung bezüglich dieses Elements gerichtet sind und daher an diesem keine Biegebeanspruchung hervorrufen. Daher ist es möglich, wenigstens ein solches längliches oder langgestrecktes Element an einer quer zur Fahrtrichtung verlaufenden Strebe des Kindersitz-Chassis zu befestigen oder zwischen zwei solchen Streben zu halten, welche diese Kräfte übernehmen und sodann dem eigentlichen Chassis zuleiten. Hierfür bieten sich auch als Anschlagelemente dienende Querstreben an, welche im hinteren Bereich des Kindersitzes an dessen Chassis etwa übereinander festgelegt sind, mit quer zur Fahrtrichtung verlaufenden Längsachsen, einmal sich zwischen den oberen Enden zweier Seitenschürzen oder kufenartiger Aufstandsflächen erstreckend, einmal zwischen deren unteren Enden. Wenn wenigstens ein längliches oder langgestrecktes Element eine ebene Gestalt aufweist, so kann es mit (je) einer ebenfalls ebenen Schweißnaht mit einer oder mehreren Streben verbunden werden.

Wenigstens eine Reihe von Ausnehmungen kann als Zahnreihe realisiert sein, wobei wenigstens ein Fortsatz des Verstellhebels wahlweise in einen der Zwischenräume zwischen je zwei benachbarten Zähnen einrasten kann. Die Zähne können am einfachsten durch einen verzahnungsförmigen Zuschnitt eines ebenen Metallstreifens gebildet sein. Die Spitzen der Zähne sollten dabei etwa in oder entgegen der Richtung der Schwenkachse zeigen, falls ein darin einrastbarer Fortsatz seitlich an dem Verstellhebel angeordnet ist.

Zur Einstellung des Verstellhebels wird wenigstens ein Fortsatz desselben aus einem Zwischenraum zwischen zwei benachbarten Zähnen manuell herausgehoben und kann sodann frei vor den Zähnen entlang der Zahnreihe verschoben werden, bis die gewünschte Stellung erreicht ist. Dazu ist ein Freiheitsgrad zwischen Fortsatz und Zahnreihe erforderlich, der entweder durch eine verstellbare Lagerung des Fortsatzes oder der Zahnreihe realisierbar ist.

Wenn - wie die Erfindung weiterhin vorsieht - die Zähne ein sägezahnförmiges Profil aufweisen, so läßt sich die Verstellung in einer Richtung - bspw. hin zu größeren Neigungswinkeln zwischen Abstandsbügel und Aufstandsfläche des Kindersitzes - ohne Lösen einer Arretierung bewirkt werden, während in entgegengesetzter Verstellrichtung ein manuelles Ausheben wenigstens eines Fortsatzes aus der Zahnreihe erforderlich ist und eine selbsttätige Verstellung in dieser Richtung daher nicht möglich ist.

Die Bewegungsfreiheit zwischen wenigstens einem Teil oder Fortsatz des Verstellhebels einerseits und der Ausnehmungs- oder Zahnreihe andererseits wird dadurch erreicht, dass wenigstens ein Fortsatz des Verstellhebels verschiebbar gelagert ist, vorzugsweise in etwa radialer Richtung, bezogen auf die Schwenkachse und/oder in etwa axialer Richtung, bezogen auf die Längsachse des Verstellhebels. Diese Verstellrichtung ist damit etwa lotrecht zu der Bewegungsbahn des Verstellhebels selbst.

Um den einmal eingestellten Neigungswinkel zwischen Abstandsbügel einerseits und Aufstandsfläche des Kindersitzes andererseits stets beizubehalten, ist Sorge dafür zu tragen, dass wenigstens ein dabei in eine Ausnehmung und/oder in einen Zahnzwischenraum eingreifender Fortsatz des Verstellhebels sich nicht selbsttätig aus der Ausnehmung oder Vertiefung lösen kann. Zu diesem Zweck ist er durch Federkraft vorgespannt, vorzugsweise in Richtung zu der Reihe von Ausnehmungen hin, insbesondere in etwa radialer Richtung von der Schwenkachse nach außen und/oder in etwa axialer Richtung der Längsachse des Verstellhebels, insbesondere von dessen Verbindung mit der Schwenkachse zu seinem freien Ende hin. Dieses Federelement ist so orientiert, dass es bestrebt ist, wenigstens einen Fortsatz in den Grund einer Ausnehmung oder Vertiefung hineinzuziehen.

Die Erfindung zeichnet sich weiterhin aus durch ein manuell betätigbares Element zum Verschieben wenigstens eines Fortsatzes des Verstellhebels, vorzugsweise entgegen der Kraft einer vorgespannten Feder. Dieses Element erlaubt es, bei Bedarf die Verrastung zu lösen und den Abstandsbügel sodann völlig frei in beiden Schwenkrichtungen verstellen zu können.

Das manuell betätigbare Element zum Verschieben wenigstens eines Fortsatzes des Verstellhebels kann als Druckknopf ausgebildet sein, der innerhalb des rohrförmigen Verstellhebels gelagert und mit wenigstens einem Fortsatz desselben gekoppelt oder verbunden ist. Einfacher Druck auf dieses Element verschiebt demnach innerhalb des rohrförmigen Verstellhebels einen diesen quer durchsetzenden Stift, dessen über die beiden ebenen Seitenflächen des Verstellhebels hinaus ragenden Enden als überstehende Fortsätze dienen und in jeweils eine Zahnreihe einrasten können. Eine diesen Stift in entgegengesetzter Richtung zu drücken beabsichtigende Feder kann jenseits des Stiftes, also innerhalb des Verstellhebels aufgenommen sein und sich ihrerseits mit einem rückwärtigen Ende an einer den rohrförmigen Verstellhebel durchsetzenden, fest verankerten Element abstützen.

Zusätzlich zu einem Druckknopf zwecks manueller Lösung eines Verriegelungselements aus einer Zahn- oder Ausnehmungsreihe kann im Bereich des freien Endes des Verstellhebels ein Handgriff angeordnet sein, bspw. In Form einer kurzen, quer zur Fahrtrichtung verlaufenden Stange von bspw. Etwa 10 cm Länge, die mit den Fingern einer Hand umgriffen werden kann, während der Daumen der selben Hand auf den Druckknopf drückt. Dadurch ist eine echte Einhandbetätigung des Verstellhebels möglich, indem dieser zunächst mittels Daumendruck aus seiner bisherigen Verriegelung gelöst, sodann mit den Fingern der selben Hand mittels des Handgriffs in die gewünschte Position gezogen wird; dort wird dann der Daumen vom Druckknopf gelöst und dadurch die neue Position arretiert.

Da sich der Verstellhebel etwa auf einer vertikalen, in Fahrtrichtung weisenden Symmetrieebene des Kindersitzes befindet, werden die von diesem an seiner Zahn- oder Ausnehmungsreihe erfahrenen Fixierungskräfte auch oder gerade bei einem Unfall, Aufprall oder einer sonstigen plötzlichen Verzögerung oder Beschleunigung symmetrisch auf beide Schenkel des Abstandsbügels eingeleitet, so dass weder der Abstandsbügel noch der Verstellhebel dabei einer nennenswerten Torsionsbeanspruchung ausgesetzt ist.

Die Verankerung des Kindersitzes könnte zwar mit den fahrzeugeigenen Gurten bewirkt werden. In Anbetracht des weit nach vorne verlagerten Schwerpunktes des besetzten Kindersitzes erscheint es jedoch vorteilhaft, im Bereich des Abstandsbügels, vorzugsweise seitlich neben dessen etwa horizontal verlaufendem Abschnitt, ein oder vorzugsweise zwei Elemente zur Verankerung des Kindersitzes an mit dem Fahrzeugchassis verbundenen bügelförmigen Verankerungspunkten (Verankerungsbügeln) vorzusehen. Eine derartige Verankerung ist in der Lage, bspw. auch extreme Seitenkräfte aufzunehmen, wie sie bei rasanter Kurvenfahrt und/oder starker Seitenneigung bzw. Schrägstellung des Fahrzeugs auftreten können, während in einem solchen Fall ein fahrzeugeigener Gurt eine seitliche Verschiebung des Kindersitzes möglicherweise nicht zu verhindern vermag. Hierbei handelt es sich um ein oder vorzugsweise zwei hakenförmige Elemente, welche einen Verankerungsbügel ggf. gemeinsam mehr oder weniger vollständig umgreifen. Zumindest ein derartiges, hakenförmiges Element kann dabei beweglich sein, um bei Bedarf von dem Verankerungsbügel gelöst werden zu können.

Zwecks Anpassung an unterschiedliche Sitz- und/oder Fahrzeugtypen kann der Abstand des/der Elements (-e) zur Verankerung des Kindersitzes an fahrzeugeigenen Verankerungsbügeln gegenüber der Vorderkante des Kindersitzes verstellbar sein, insbesondere durch eine teleskopartig ausziehbare Beschaffenheit der Verbindung zwischen den Verankerungselementen und dem Kindersitz-Chassis. Andererseits sollten derartige, ineinandergesteckte und auseinander ausziehbare Profile in verschiedenen Zwischenpositionen gegeneinander verriegelbar sein, so dass sich eine eingestellte Position selbsttätig nicht ändern kann. Eine solche Verriegelung kann bspw. mittels eines oder mehrerer Querstifte bewirkt werden, der/die in eines von mehreren Ausnehmungen, insbesondere Bohrungen der aneinanderliegenden oder ineinander geführten Schienen bzw. Profile einrasten kann/können. Es kann sich hierbei auch um quer bzw. radial bezüglich der betreffenden Profillängsachse entgegen von nach außen drängenden Druckfedern verstellbare Elemente handeln, bspw. mit einer kalottenförmigen Stirnseite, die manuell in das betreffende Profil hineingedrückt werden, um eine Verrastung zu lösen, und die selbsttätig wieder nach außen schnappen, wenn sich in beiden, teleskopisch gegeneinander verschiebbaren Profilen zwei Löcher in einer gemeinsamen Flucht gegenüberstehen.

Solche Verankerungspunkte, insbesondere -bügel, an der Fahrzeugkarosserie sind mittlerweile genormt (z.B. ISOFIX) und finden sich bei neueren Fahrzeugtypen im Bereich des Schlitzes zwischen Rückenlehne und Sitzfläche eines Fahrzeugsitzes. Sofern diese Verankerungspunkte verwendet werden, bilden sie sozusagen Dreh- oder Angelpunkte, um welche der Kindersitz verschwenken kann - entweder nach oben in Richtung zur Rückenlehne hin oder nach unten in das Sitzpolster hinein. Während die erstere, nach oben gerichtete Schwenkbewegung durch den erfindungsgemäßen Abstandsbügel vermieden wird, ist ein solcher Abstandsbügel jedoch nicht in der Lage, ein vorübergehendes Herabschwenken des Kindersitzes unter Zusammenpressen des Sitzpolsters zu vermeiden. Deshalb ist an dem Chassis des Kindersitzes, vorzugsweise an einer quer verlaufenden Strebe desselben, im Bereich der Rückenlehne wenigstens ein nach unten ragender Stützfuß angeordnet. Dieser gelangt ggf. mit dem Boden der Fahrgastzelle in Kontakt und verhindert ein weiteres Herabschwenken des Kindersitzes.

Zwecks Anpassung an Fahrzeugsitze mit unterschiedlicher Sitzhöhe sollte die Länge wenigstens eines Stützfußes verstellbar sein. Zu diesem Zweck kann auch der Stützfuß teleskopisch ausziehbar ausgebildet sein. Eine Arretierung sollte ebenfalls vorgesehen sein und kann entweder gerastert erfolgen oder stufenlos. In ersterem Fall kann wenigstens ein Teleskoprohr eine Reihe von Ausnehmungen aufweisen, in die ein in dem anderen Telskoprohr radial bezüglich dessen Längsachse verstellbar geführtes Element einrasten kann, bspw. unter dem Einfluß einer internen Feder. Eine stufenlose Verstellung könnte bspw. dadurch realisiert sein, dass in dem äußeren Teleskoprohr eine Bohrung mit Innengewinde vorgesehen ist, worin eine Stellschraube einschraubbar ist, die mit ihrer vorderen Stirnseite reibschlüssig gegen die Außenseite des inneren Teleskoprohrs drückt.

Schließlich entspricht es der Lehre der Erfindung, dass wenigstens ein Stützfuß demontierbar oder wegklappbar ist, vorzugsweise an die Unterseite der Sitzfläche des Kindersitzes heranschwenkbar. Solchenfalls können die Abmessungen des erfindunggemäßen Kindersitzes für dessen Lagerung und/oder Transport verringert werden, um den benötigten Platzbedarf zu reduzieren.

Weitere Merkmale, Einzelheiten, Vorteile und Wirkungen auf der Basis der Erfindung ergeben sich aus der folgenden Beschreibung einer bevorzugten Ausführungsform der Erfindung sowie anhand der Zeichnung. Hierbei zeigt:
- Fig. 1: einen erfindungsgemäßen Kindersitz zum Einbau in ein Fahrzeug entgegen dessen Fahrtrichtung, mit einem Abstandsbügel zur Abstützung an dem Rückenpolster eines Autositzes, aus einer seitlichen Perspektive;
- Fig. 2: den Kindersitz aus Fig. 1 aus einem Blickwinkel von der Unterseite des Abstandsbügels her gesehen;

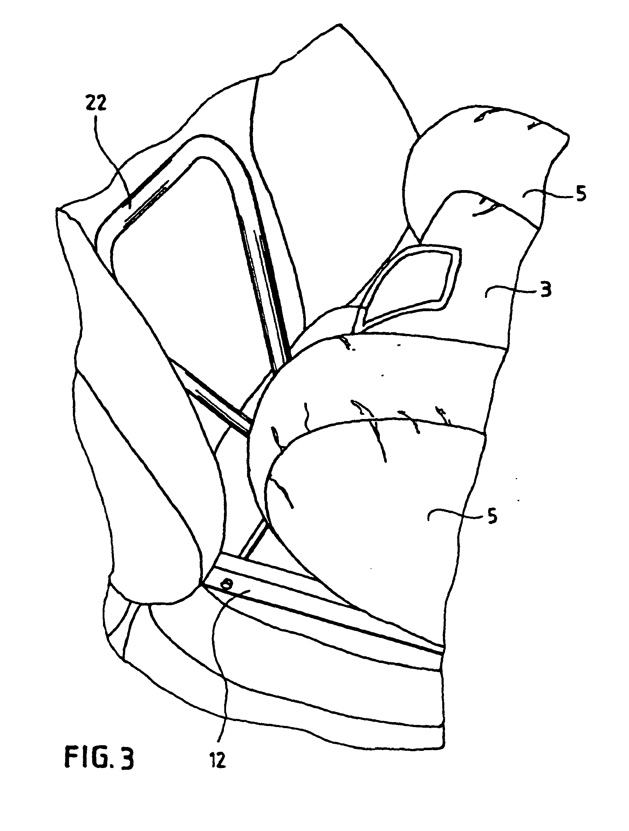

- Fig. 3: einen Blick auf den Abstandsbügel des Kindersitzes aus Fig. 1, seitlich von oben gesehen;
- Fig. 4: eine perspektivische Ansicht auf einen rückwärtigen Teil des Chassis des Kindersitzes aus Fig. 1, von dessen Rückenlehne her betrachtet, wobei ein als Griff ausgebildetes Betätigungselement zum manuellen Verstellen des Abstandsbügels zu sehen ist; sowie
- Fig. 5: etwa einen der Fig. 4 entsprechenden Teil des Chassis des Kindersitzes aus Fig. 1 aus einer etwas anderen Perspektive, sowie ohne den Griff des Betätigungselements zum manuellen Verstellen des Abstandsbügels.

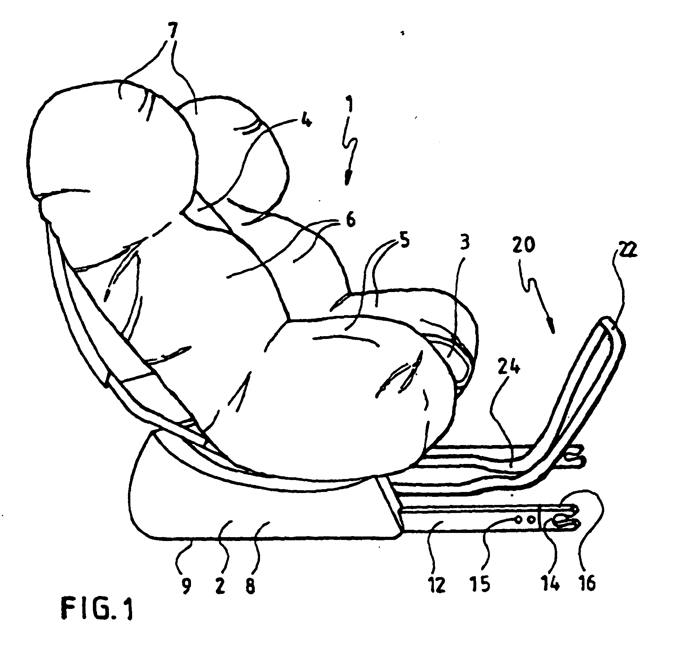

Der in Fig. 1 dargestellte Kindersitz 1 ist je nach Ausführungsform für Kinder bis zu 3 Jahren oder für Kinder bis zu 12 Jahren geeignet. Er besteht in der dargestellten Ausführungsform aus einem Chassis 2, der eigentlichen Sitzfläche 3, einer daran anschließenden Rückenlehne 4 mit einem den Kopf stützenden Bereich, sowie aus seitlichen Armlehnen 5, Seiten- bzw. Rumpflehnen 6 und Ohrlehnen 7.

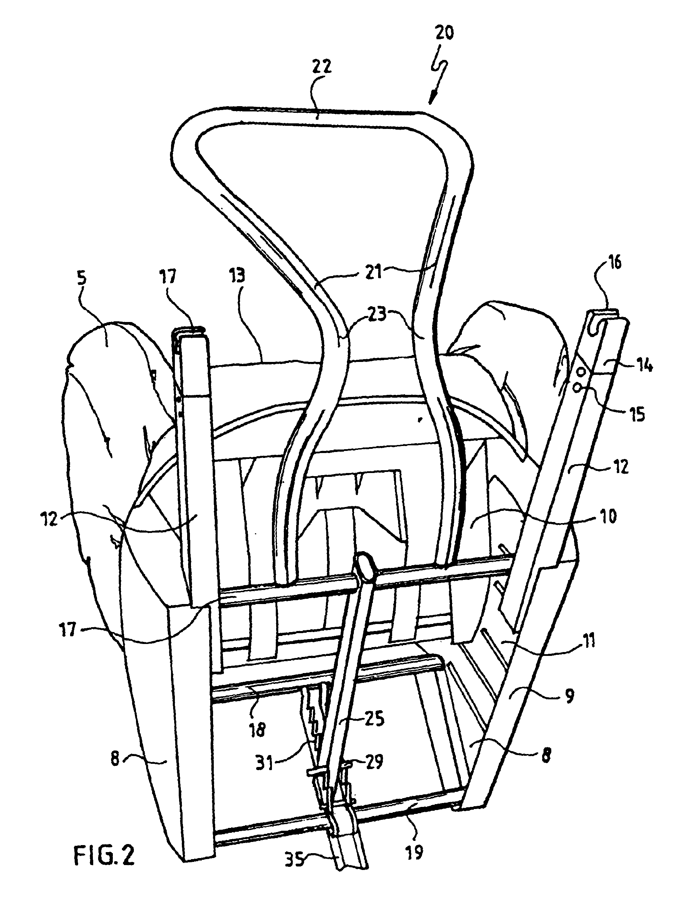

Das Chassis 2 umfaßt im unteren Bereich zwei kufenförmige Seitenteile 8, welche etwa parallel zueinander in Fahrtrichtung verlaufen und mit je einer etwa ebenen Unterseite 9 zum Aufsetzen auf das Sitzpolster eines Fahrzeugsitzes versehen sind. In Fig. 2 ist das Chassis 2 im einzelnen wiedergegeben. Zentraler Bestandteil des Chassis ist die Unterseite 10 der Sitzfläche 3. Damit verbunden sind die beiden Seitenteile 8, welche aus je einer stabilen Metallplatte gearbeitet sind.

Der Kindersitz 1 wird in einem Fahrzeug nicht in Fahrtrichtung montiert - also in der selben Richtung wie der Fahrersitz - sondern entgegen derselben, so dass ein darin sitzendes Kind nach rückwärts blickt.

Für eine derartige Montage ist an den Innenseiten der beiden Seitenteile 11 des Chassis 2 je ein Hohlprofil 12 festgelegt, bspw. festgeschweißt, und zwar derart, dass es sich parallel zur Fahrtrichtung erstreckt und über die der Rückenlehne 4 gegenüberliegenden Vorderkante 13 der Sitzfläche 3 übersteht. Die Hohlprofile 12 haben jeweils einen quadratischen oder rechteckigen Querschnitt. In jedem der beiden Hohlprofile 12 ist jeweils ein zweites Profil bzw. Innenprofil 14 aufgenommen, und zwar teleskopisch verschiebbar. Sowohl das Hohlprofil 12 als auch das Innenprofil 14 weisen jeweils Bohrungen 15 auf, welche sich bei bestimmten Verschiebepositionen der beiden ineinander gesteckten Profile 12, 14 in eine gemeinsame Fluchtlinie bringen lassen, so dass mittels eines hindurchgreifenden Splints od. dgl. eine Verriegelung der eingestellten Relativposition zwischen den beiden Profilen 12, 14 herbeigeführt werden kann. Anstelle eines Splints können dazu auch innerhalb des Innenprofils 14 angeordnete, quer verschiebbare Elemente dienen, die von einer oder mehreren, integrierten Federn nach außen gedrängt werden, sobald sich in ihrem Bereich zwei miteinander fluchtende Bohrungen 15 befinden.

Am freien Ende der solchermaßen in ihrer Gesamtlänge verstellbaren Profile 12, 14 befindet sich je ein Rastkopf 16 zur Festlegung an einem Verankerungspunkt des betreffenden Fahrzeugs, welcher seinerseits mit dem fahrzeugeigenen Chassis verbunden ist und durch einen Schlitz zwischen Rückenlehne und Sitzpolster des Fahrzeugsitzes hindurch zugänglich ist. Eine solcher Verankerungspunkt hat eine etwa bügelförmige Grundgestalt mit einem vorderen, quer zur Fahrtrichtung verlaufenden Mittelsteg, welcher von dem Rastkopf 16 umgriffen werden kann. Zu diesem Zweck verfügt der Rastkopf 16 an seiner freien Stirnseite über einen Schlitz; dieser ähnelt einer Nut, die quer zur Fahrtrichtung verläuft. Die beiden Seitenflanken des Schlitzes weisen jeweils nach innen, d.h. aufeinander zu weisende Vorsprünge auf, welche sich hinter dem Mittelsteg eines bügelförmigen Verankerungspunktes haken und dadurch eine formschlüssige Verbindung ausbilden. Zum Schließen und Lösen dieser Verbindung läßt sich zumindest einer dieser hakennasenförmigen Vorsprünge aus dem Bereich des Schlitzes 17 herausbewegen, bspw. durch manuelle Betätigung entgegen der rückstellenden Kraft einer Feder.

Ist solchermaßen eine Festlegung des Kindersitzes 1 an den Verankerungspunkten eines Fahrzeugs erfolgt, so kann sich der Kindersitz 1 weder in Fahrtrichtung noch quer dazu mehr bewegen.

Obwohl außerdem die Unterseiten 9 der Seitenteile 8 auf dem Sitzpolster des Fahrzeugsitzes aufstehen, wäre dennoch eine Bewegung des Kindersitzes 1 in vertikaler Richtung noch möglich, wobei die beiden, in einer quer zur Fahrtrichtung orientierten Flucht liegenden Rastköpfe 16 eine Art Achse bilden, um die sodann noch ein Kippen des Kindersitzes 1 möglich wäre - entweder nach oben, so dass die Rückenlehne 4 des Kindersitzes 1 sich der Rückenlehne des Autositzes nähert, oder aber entgegengesetzt, wobei sich der Kindersitz 1 zumindest vorübergehend in das Sitzpolster des Fahrzeugsitzes preßt.

Um diese Bewegungsmöglichkeit weiter einzuschränken, sind die beiden Seitenteile 8 des Chassis 2 unterhalb der Unterseite 10 der Sitzfläche 3 durch mehrere quer verlaufende Elemente 17, 18, 19 miteinander verbunden.

Eines dieser Elemente ist als Schwenkachse 17 ausgebildet, befindet sich nahe der freien Vorderkante 13 der Sitzfläche 3 und ist als Rohr mit um seine Längsachse rotationssymmetrischem Querschnitt gestaltet. Dessen beide Enden sind auf je einen von zwei in einer gemeinsamen Flucht liegenden, aufeinander zu weisenden Achsstummeln an den Innenseiten 11 der beiden Seitenteile 8 aufgesteckt, so dass das Rohr 17 eine Verdrehung um seine Längsachse ausführen kann.

An der Schwenkachse 17 sind die beiden Enden eines nach vorne über die freie Vorderkante 13 der Sitzfläche 3 hinaus weisenden Abstandsbügels 20 von etwa U-förmiger Grundgestalt festgelegt, insbesondere angeschweißt. Der gesamte Abstandsbügel 20 ist aus einem einzigen Rohr, vorzugsweise aus Metall, gebogen und folgt daher einem relativ sanft geschwungen Verlauf. Dennoch kann man zwei spiegelbildlich zueinander angeordneten Schenkel 21 und einen dieselben miteinander verbindenden Mittelsteg 22 unterscheiden. Der Mittelsteg 22 ist daran zu erkennen, das er ziemlich exakt quer zur Fahrtrichtung bzw. parallel zu der Schwenkachse 17 verläuft; es handelt sich dabei um den von der Schwenkachse 17 am weitesten entfernten Bereich des Abstandsbügels 20. Die Enden des Mittelstegs 22 sind mit einem sanften Biegeradius um mehr als 90° umgebogen und werden als Schenkel 21 fortgeführt. Diese nähern sich zunächst bis auf einen geringen Abstand an, bspw. In der Größenordnung weniger Zentimeter, bspw. etwa 10 cm, um sich anschließend jenseits dieses Annäherungsbereichs 23 - in der Nähe der Schwenkachse 17 - wieder voneinander zu entfernen. Die beiden Enden der Schenkel 21 sind an der Schwenkachse 17 festgelegt, insbesondere angeschweißt. Diese Schweißverbindungen liegen etwa 15 bis 25 cm weit auseinander. Durch diese vergleichsweise große Entfernung erhält der Abstandsbügel 20 eine maximale Stabilität, insbesondere Verwindungssteifigkeit. Wie man am besten der Fig. 1 entnehmen kann, ist der Abstandsbügel 20 nicht eben, sondern in einem Abstand von etwa 20 bis 30 cm vor der Vorderkante 13 der Sitzfläche 3 des Kindersitzes 1 nach oben umgebogen, und zwar um einen gesamten Winkel in der Größenordnung von etwa 90°, vorzugsweise etwas weniger als 90°, bspw. ca. 70°. Auch dieser vertikale Biegebereich 24 der beiden Schenkel 21 folgt einem relativ sanften Verlauf. Der Annäherungsbereich 23 der beiden Schenkel 21 liegt etwa bei dem vertikalen Biegebereich 24 und dient dem Zweck, Platz für die Füße eines Kindes zu schaffen.

Durch die Drehbarkeit der Schwenkachse 17 um ihre Längsachse ist der Abstandsbügel 20 verschwenkbar. Infolge der drehfesten Schweißverbindung zwischen Abstandsbügel 20 und Schwenkachse 17 überträgt sich die jeweilige Schwenkstellung des Abstandsbügels 20 als Drehwinkel auf die Schwenkachse 17.

An dieser ist innerhalb der vertikalen Mittelebene des Kindersitzes 1 ein Verstellhebel 25 festgelegt, dem Abstandsbügel 20, insbesondere dessen unterem, horizontalen Abschnitt nahe der Schwenkachse 17 etwa diametral gegenüberliegend. Der Verstellhebel 25 ist als Hohlprofil ausgebildet von länglichem Querschnitt mit einer längeren Erstreckung in etwa vertikaler Richtung. Zur Verbindung mit der Schwenkachse 17 sind die beiden Flachseiten des Verstellhebels 25 in einer gemeinsamen Flucht durchbohrt, um Platz zu schaffen zum Hindurchstecken der Schwenkachse 17. Diese beiden Elemente 17, 25 sind sodann durch Schweißnähte miteinander verbunden. Der Verstellhebel 25 bildet zusammen mit dem Abstandsbügel 20 einen doppelarmigen Hebel und bestimmt daher mit seiner Winkelstellung auch den Neigungswinkel des Abstandsbügels 20 gegenüber der Aufstandsflächen 19 des Kindersitzes 1; er kann daher zur Verstellung des Abstandsbügels 20 verwendet werden.

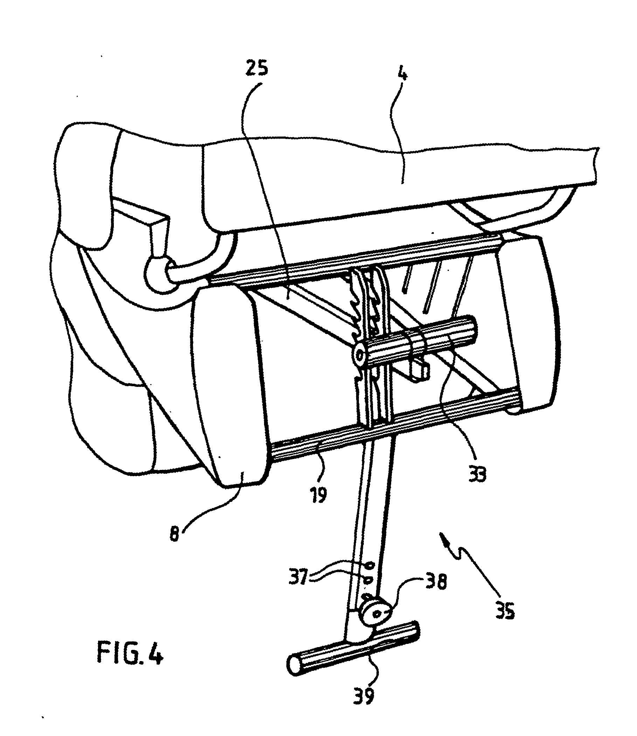

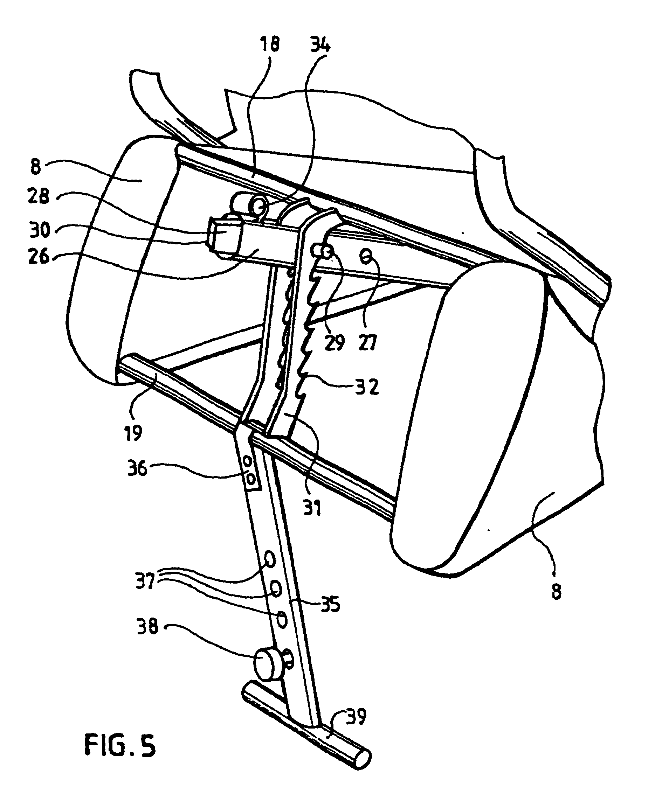

Da die Länge des Verstellhebels 25 etwa der Tiefe des Kindersitzes 1 bzw. von dessen Sitzfläche 3 entspricht, liegt das freie Ende 26 des Verstellhebels 25 unter oder hinter der Rückenlehne 4, wie die Fig. 4 und 5 erkennen lassen. In der Nähe dieses freien Endes 26 sind die beiden Flachseiten des Verstellhebels 25 abermals durchbohrt und durch einen hindurchgesteckten Querstift 27 miteinander verbunden. Innerhalb des als Hohlprofil ausgebildeten Verstellhebels 25 dient der Querstift 27 als Widerlager für eine zur Längsachse des Verstellhebels 25 parallele Druckfeder, die sich daran mit ihrer dem Rohrende 26 abgewandten Stirnseite abstützt, während ihre dem Rohrende 26 zugewandte Stirnseite einen in dem Verstellhebel 25 aufgenommenen Block 28 abstützt, der bspw. aus Kunststoff gefertigt sein kann und mit seinem Umfang derart an den Innenquerschnitt des Verstellhebels 25 angepaßt ist, dass er darin verschiebbar, aber unverdrehbar geführt ist. Dieser Block 28 ist mit einer quer verlaufenden Bohrung versehen, in welche ein Querstift eingepreßt ist, welcher länger ist als die Breite des Verstellhebels 25, so dass er mit seinen beiden Enden 29 durch je ein in Längsrichtung des Verstellhebels 25 verlaufendes Langloch an beiden Seitenflächen aus dem Verstellhebels 25 herausragt. Durch diese beiden Langlöcher und die darin eingreifenden Stiftenden 29 ist der Verschiebebereich des Blockes 28 begrenzt. Während die interne Feder bestrebt ist, den Block 28 aus dem rückwärtigen, offenen Ende 26 des Verstellhebels 25 herauszuschieben, kann dieser durch einen manuellen Druck auf die rückwärtige Stirnseite 30 des Blocks 28 tiefer in den Verstellhebel 25 hineingedrückt werden.

Das rückwärtige Ende 26 des Verstellhebels 25 ragt zwischen den beiden Querstreben 18, 19 des Chassis 2 des Kindersitzes 1 hindurch, da beide Querstreben 18, 19 etwa vertikal unterhalb der Rückenlehne 4 liegen, die obere Querstrebe 18 nahe der Unterseite 10 der Sitzfläche 3, die untere Querstrebe dagegen knapp oberhalb der unterseitigen Aufstandsflächen 9 der Seitenteile 8.

Diese beiden Querstreben 18, 19 sind zu beiden Seiten des Verstellhebels 25 durch je einen von zwei flachen bzw. ebenen Metallstreifen 31 miteinander verbunden. Diese beiden Metallstreifen 31 verlaufen in einem geringen gegenseitigen Abstand, der nur geringfügig größer ist als die Breite des Verstellhebels 25, und ihre Grundflächen sind parallel zueinander. Sie sind an den beiden Querstreben 18, 19 vorzugsweise stumpf angeschweißt und bilden dadurch gemeinsam einen etwa vertikal laufenden Schlitz für den Verstellhebel 25. Dieser hat daher in seitlicher Richtung nur so viel Spielraum, dass er reibungsfrei verstellt werden kann entsprechend einer Verschwenkung um die Schwenkachse 17. Diese Schwenkbewegung wird in vertikaler Richtung begrenzt durch die beiden Querstreben 18, 19.

Die beiden Metallstreifen 31 erstrecken sich zwischen den beiden Querstreben 18, 19 mit ihren Längsachsen nahezu vertikal. Sie sind deckungsgleich zugeschnitten und weisen an ihrer der Schwenkachse 17 zugewandten Kante einen verzahnten Bereich 32 auf. Die Zähne sind etwa gleich groß und haben Abstände, welche gleich oder größer sind als der Durchmesser der Enden 29 des Querstifts in dem Block 28; die Vertiefungen zwischen jeweils zwei benachbarten Zähnen haben an ihrem Grund jeweils einen Wölbungsradius, welcher etwa dem Radius der Enden 29 des Querstifts in dem Block 28 entspricht, so dass diese Enden 29 in von äußeren Kräften freiem Zustand unter dem Einfluß der internen Druckfeder, welche sich an dem Querstift 27 abstützt, nach hinten in zwei miteinander fluchtende Vertiefungen der Verzahnung 32 gepreßt werden. Durch die einander zugewandten Flanken der an diese Vertiefung angrenzenden Zähne ist jegliche vertikale Bewegung des Verstellhebels 25 und damit auch des mit diesem über die Schwenkachse starr verbundenen Abstandsbügels 20 gehemmt - der Abstandsbügel 20 verharrt in der solchermaßen eingestellten Schwenkposition.

Um den Abstandsbügel 20 zu verstellen, muß eine Person zunächst durch Druck auf die freie Stirnseite 30 des Blocks 28 die seitlichen Fortsätze 29 des Verstellhebels 25, nämlich die Enden 29 des in dem Block aufgenommenen Querstifts, aus den Vertiefungen zwischen den Zähnen des Verzahnungsbereichs 32 herausheben. Ist dies geschehen, kann der Verstellhebel zwischen seinen beiden endseitigen Anschlägen 18, 19 verstellt werden. Hierzu dient der Person eine kurze, quer zum Verstellhebel verlaufende Griffstange 33, die in einem an der Oberseite des Verstellhebels 25 nahe dessen freiem Ende 26 angeschweißten Auge 34 fixiert ist. Ist die gewünschte Schwenkposition des Abstandsbügels 20 erreicht, wird der Druck auf die Stirnseite 30 des Blocks 28 beendet und die interne Feder schiebt diesen wieder nach außen, wobei die seitlichen Fortsätze 29 wieder in Eingriff mit der Verzahnung 32 gelangen.

Während der Abstandsbügel 20 dazu dient, ein Hochschwenken des Kindersitzes 1 um die an den Verankerungspunkten des Fahrzeugchassis eingerasteten Rastköpfe 16 zu vermeiden, sind sie nicht in der Lage, bei jedem Bremsvorgang des Fahrzeugs eine Nickbewegung des Kindersitzes 1 nach vorne zu vermeiden. Einer solchen Bewegung wirkt indes eine Fußstütze 35 entgegen. Diese ist als langgestrecktes Element ausgebildet, das an der unteren Querstrebe 19 zwischen den Metallstreifen 31 gelagert ist, so dass es um diese Querstrebe 19 verschwenkt, insbesondere ein- und ausgeklappt werden kann. In ausgeklappter Position verhindert ein Fortsatz 36 an der Fußstütze 35, der in diesem Zustand an der unverzahnten Kante der Metallstreifen 31 zur Anlage gelangt, dass die Fußstütze 35 weiter ausgeschwenkt werden kann als bis in die etwa vertikale, mit der Rückenlehne 4 des Kindersitzes 1 etwa fluchtende Position gemäß den Fig. 4 und 5.

Zur Anpassung an Fahrzeugsitze mit unterschiedlicher Höhe ist die Fußstütze 35 teleskopisch ausziehbar. Das Außenrohr weist eine Reihe von Bohrungen 37 auf, durch welche eine Schraube 38 hindurchsteckbar ist, die in eine Gewindebohrung des Innenrohrs einschraubbar ist, wenn diese Gewindebohrung mit einer Bohrung 37 fluchtet. Mit dieser Schraube 38 werden die beiden Telsekoprohre gegeneinander arretiert, und dadurch wird die eingestellte Länge der Fußstütze 35 fixiert. Am unteren Ende verfügt die Fußstütze 35 über einen Fuß 39 in Form einer kurzen, am Innenrohr festgelegten Stange mit quer zur Fahrtrichtung verlaufender Orientierung. Dieser Fuß 39 verteilt ggf. einwirkende Kräfte auf einen großen Flächenbereich und reduziert dadurch die Druckbelastung am Boden des Fahrzeugs.

### Bezugszeichenliste

- 1: Kindersitz
- 2: Chassis
- 3: Sitzfläche
- 4: Rückenlehne
- 5: Armlehne
- 6: Rumpflehne
- 7: Ohrlehne
- 8: Seitenteile
- 9: Unterseite
- 10: Unterseite
- 11: Innenseite
- 12: Hohlprofil
- 13: Vorderkante
- 14: Innenprofil
- 15: Bohrungen
- 16: Rastkopf
- 17: Schwenkachse
- 18: Querstrebe
- 19: Querstrebe
- 20: Abstandsbügel
- 21: Schenkel
- 22: Mittelsteg
- 23: Annäherungsbereich
- 24: vertikaler Biegebereich
- 25: Verstellhebel
- 26: freies Ende
- 27: Querstift
- 28: Block
- 29: Ende
- 30: Stirnseite
- 31: Metallstreifen
- 32: verzahnter Bereich
- 33: Griffstange
- 34: Auge
- 35: Fortsatz
- 36: Fortsatz
- 37: Bohrung
- 38: Schraube
- 39: Fuß

## Patentansprüche

1. Entgegen der Fahrtrichtung in ein Fahrzeug einbaubarer, auf einem fahrzeugeigenen Sitz aufsetzbarer Kindersitz (1), mit einer Sitzfläche (3), an deren in Sitzrichtung rückwärtiger Kante (13) sich eine Rückenlehne (4), ggf. samt Kopfstütze, anschließt, sowie ggf. mit seitlichen Ohr-, Arm- und/oder Rumpflehnen (5-7), und mit einem über die in Sitzrichtung vordere, freie Kante (13) der Sitzfläche (3) überstehenden Abstandsbügel (20) zur Abstützung der Vorderseite des Kindersitzes (1) in einem Abstand vor der Rücklehne des fahrzeugeigenen Sitzes, wobei der Abstandsbügel (20) eine etwa U-förmige Grungestalt mit zwei spiegelbildlich zueinander angeordneten Schenkeln und einem dieselben miteinander verbindenden Mittelsteg (22) aufweist und um eine quer zur Fahrtrichtung verlaufende Achse (Schwenkachse 17) verschwenkbar ist, wobei der Abstandsbügel (20) in mehreren Positionen feststellbar oder einrastbar ist, derart, dass seine Bewegung in zumindest einer Bewegungs-, insbesondere Schwenkrichtung vollständig gehemmt ist, **dadurch gekennzeichnet, dass** an der Schwenkachse (17) ein dem angrenzenden, bevorzugt etwa horizontalen Abschnitt des Abstandsbügels (20) etwa gegenüberliegender Verstellhebel (25) angeordnet ist, der vorzugsweise starr mit der Schwenkachse (17) verbunden ist, insbesondere mit dieser verschweißt, und der etwa parallel zu der Sitzrichtung verläuft, vorzugsweise etwa horizontal unterhalb der Unterseite (10) der Sitzfläche (3), und der bis etwa unter die Rückenlehne (4) reicht, so dass er bei eingebautem Sitz unterhalb der dann in Fahrtrichtung nach vorne weisenden Rückenlehne bequem zugänglich ist.

2. Kindersitz nach Anspruch 1, **dadurch gekennzeichnet, dass** die beiden Enden (21) des Abstandsbügels (20) mit der vorzugsweise rohrförmigen Schwenkachse (17) verbunden sind, bspw. an diese angeschweißt.

3. Kindersitz nach Anspruch 1 oder 2, **dadurch gekennzeichnet, dass** der Abstandsbügel (20) sich von seinem (-en) Befestigungs- oder Anlenkpunkt(en), insbesondere von der Schwenkachse (17), aus gesehen zunächst etwa horizontal in Sitzrichtung nach vorne erstreckt.

4. Kindersitz nach einem der Ansprüche 1 bis 3, **dadurch gekennzeichnet, dass** der Abstandsbügel (20) in einem Abstand vor der freien Vorderkante (13) der Sitzfläche (3) des Kindersitzes (1) aufwärts umgebogen ist.

5. Kindersitz nach einem der vorhergehenden Ansprüche, **dadurch gekennzeichnet, dass** der Verstellhebel (25) im Bereich seines freien Endes (26) gegenüber dem Chassis (2) des Kindersitzes (1) feststellbar ist.

6. Kindersitz nach einem der vorhergehenden Ansprüche, **dadurch gekennzeichnet, dass** an dem Verstellhebel (25) wenigstens ein etwa radial gegenüber seiner Längsachse gerichteter Fortsatz (29) vorgesehen ist zum Eingriff und/oder Einrasten in eine oder mehrere Ausnehmungen am Chassis (2) des Kindersitzes (1).

7. Kindersitz nach einem der vorhergehenden Ansprüche, **dadurch gekennzeichnet, dass** am Chassis (2) des Kindersitzes (1) eine etwa tangential zur Schwenkachse (17) bis bogenförmig um die Schwenkachse (17) verlaufende Reihe von Ausnehmungen vorgesehen ist, insbesondere zum Eingriff und/oder Einrasten wenigstens eines Fortsatzes (29) des Verstellhebels (25).

8. Kindersitz nach Anspruch 7, **dadurch gekennzeichnet, dass** wenigstens eine Reihe von Ausnehmungen durch eine Zahnreihe (32) gebildet ist, wobei wenigstens ein Fortsatz (29) des Verstellhebels (25) wahlweise in einen der Zwischenräume zwischen je zwei benachbarten Zähnen einrasten kann.

9. Kindersitz nach einem der vorhergehenden Ansprüche, **dadurch gekennzeichnet, dass** wenigstens ein Fortsatz (29) des Verstellhebels (25) verschiebbar gelagert ist, vorzugsweise in etwa radialer Richtung, bezogen auf die Schwenkachse (17) und/oder in etwa axialer Richtung, bezogen auf die Längsachse des Verstellhebels (25).

10. Kindersitz nach Anspruch 9, **dadurch gekennzeichnet, dass** wenigstens ein Fortsatz (29) des Verstellhebels (25) durch Federkraft vorgespannt ist, vorzugsweise in Richtung zu der Reihe von Ausnehmungen, insbesondere in etwa radialer Richtung von der Schwenkachse (17) nach außen und/oder in etwa axialer Richtung der Längsachse des Verstellhebels (25) von dessen Verbindung mit der Schwenkachse (17) zu seinem freien Ende (26) hin.

11. Kindersitz nach einem der Ansprüche 9 oder 10, **gekennzeichnet durch** ein manuell betätigbares Element (28,30) zum Verschieben wenigstens eines Fortsatzes (29) des Verstellhebels (25), vorzugsweise entgegen der Kraft einer vorgespannten Feder, insbesondere in Form eines Druckknopfes, der innerhalb des rohrförmigen Verstellhebels (25) gelagert und mit wenigstens einem Fortsatz (29) desselben gekoppelt oder verbunden ist.

12. Kindersitz nach einem der vorhergehenden Ansprüche, **dadurch gekennzeichnet, dass** an dem Chassis (2) des Kindersitzes (1), vorzugsweise an einer quer verlaufenden Strebe (19) desselben, im Bereich der Rückenlehne (4) wenigstens ein nach unten ragender Stützfuß (35) angeordnet ist, vorzugsweise ein in seiner Länge verstellbarer und/oder demontierbarer und/oder wegklappbarer Stützfuß (35).

13. Kindersitz nach einem der vorhergehenden Ansprüche, **dadurch gekennzeichnet, dass** im Bereich des Abstandsbügels (20), vorzugsweise seitlich neben dessen etwa horizontal verlaufendem Abschnitt, ein oder bevorzugt zwei Elemente (16) zur Verankerung des Kindersitzes (1) an mit dem Fahrzeugchassis verbundenen Laschen vorgesehen ist/sind, wobei vorzugsweise der Abstand des/der Elements (-e) (26) zur Verankerung des Kindersitzes (1) an fahrzeugeigenen Verankerungspunkten gegenüber der Vorderkante (13) des Kindersitzes (1) verstellbar ist, insbesondere durch eine teleskopartig ausziehbare Beschaffenheit der Verbindung (12,14,15) zwischen den Verankerungselementen (16) und dem Kindersitz-Chassis (2).

## Claims

1. Child seat (1) which is mountable in a vehicle and can be placed on a vehicle seat counter to the direction of travel, having a seat surface (3), which is adjoined at its rear edge, as seen in a direction of the seat, by a backrest (4), possibly together with a headrest, and possibly having lateral ear-level rests, armrests and/or torso-supporting rests (5-7), and having a spacer bracket (20) which projects beyond the free front edge (13) of the seat surface (3), as seen in the direction of the seat, and is intended for supporting the front side of the child seat (1) at a distance in front of the backrest of the vehicle seat, wherein the spacer bracket (20) has an approximately U-shaped basic configuration with two limbs arranged in mirror-inverted fashion in relation to one another and with a middle crossbar (22) connecting these limbs, and is pivotable about a spindle (pivot spindle 17) running transversely to the direction of travel, wherein the spacer bracket (20) can be locked or latched in a number of positions such that its movement in at least one movement direction, in particular pivoting direction, is fully inhibited, **characterized in that** the pivot spindle (17) has arranged on it an adjusting lever (25) which is located approximately opposite the adjacent, preferably approximately horizontal portion of the spacer bracket (20), and is connected preferably rigidly to the pivot spindle (17), in particular is welded thereto, and runs approximately parallel to the direction of the seat, preferably approximately horizontally beneath the underside (10) of the seat surface (3), and approximately extends to a point beneath the backrest (4), and therefore, with the seat installed, the adjusting lever (25) is conveniently accessible beneath the backrest (4), which is then oriented forwards in the direction of travel.

2. Child seat according to Claim 1, **characterized in that** the two ends (21) of the spacer bracket (20) are connected to the preferably tubular pivot spindle (17), for example are welded thereto.

3. Child seat according to Claim 1 or 2, **characterized in that**, as seen from its fastening or articulation point or points, in particular from the pivot spindle (17), the spacer bracket (20) extends forwards at first approximately horizontally in the direction of the seat.

4. Child seat according to one of Claims 1 to 3, **characterized in that** the spacer bracket (20) is bent upwards at a distance in front of the free front edge (13) of the seat surface (3) of the child seat (1).

5. Child seat according to one of the preceding claims, **characterized in that** the adjusting lever (25) is lockable in the region of its free end (26) in relation to the chassis (2) of the child seat (1).

6. Child seat according to one of the preceding claims, **characterized in that** the adjusting lever (25) has provided on it at least one extension (29) which is directed approximately radially in relation to its longitudinal axis and is intended for engaging and/or latching in one or more recesses on the chassis (2) of the child seat (1).

7. Child seat according to one of the preceding claims, **characterized in that** the chassis (2) of the child seat (1) has provided on it a row of recesses, which runs approximately tangentially to the pivot spindle (17) to arcuately around the pivot spindle (17) and in which at least one extension (29) of the adjusting lever (25) is intended, in particular, to engage and/or latch.

8. Child seat according to Claim 7, **characterized in that** at least one row of recesses is formed by a row of teeth (32), wherein at least one extension (29) of the adjusting lever (25) can latch optionally into one of the interspaces between two adjacent teeth.

9. Child seat according to one of the preceding claims, **characterized in that** at least one extension (29) of the adjusting lever (25) is mounted such that it can be shifted, preferably approximately in a radial direction in relation to the pivot spindle (17) and/or approximately in an axial direction in relation to the longitudinal axis of the adjusting lever (25).

10. Child seat according to Claim 9, **characterized in that** at least one extension (29) of the adjusting lever (25) is biased by a spring force, preferably in the direction of the row of recesses, in particular approximately radially outwards from the pivot spindle (17) and/or approximately in the axial direction of the longitudinal axis of the adjusting lever (25), from the connection between the adjusting lever and the pivot spindle (17) in the direction of the free end (26) of the adjusting lever (25).

11. Child seat according to either of Claims 9 and 10, **characterized by** a manually actuable element (28, 30) for shifting at least one extension (29) of the adjusting lever (25), preferably counter to the force of a biased spring which is in particular embodied as a pushbutton which is mounted within the tubular adjusting lever (25) and is coupled or connected to at least one extension (29) of the same.

12. Child seat according to one of the preceding claims, **characterized in that** the chassis (2) of the child seat (1), preferably a transversely running strut (19) of the same, has arranged on it, in the region of the backrest (4), at least one downwardly projecting supporting foot (35), preferably a supporting foot (35) which is adjustable in length and/or removable and/or back-foldable.

13. Child seat according to one of the preceding claims, **characterized in that** one or preferably two elements (16) for anchoring the child seat (1) on lugs connected to the vehicle chassis is/are provided in the region of the spacer bracket (20), preferably laterally alongside the approximately horizontally running portion thereof, wherein it is preferably possible to adjust the distance of the element (s) (16) for anchoring the child seat (1) at anchorage points of the vehicle in relation to the front edge (13) of the child seat (1), in particular by the connection (12, 14, 15) between the anchoring elements (16) and the child-seat chassis (2) being of a telescopically extensible nature.

## Revendications

1. Siège pour enfant (1) pouvant être installé contre le sens de la marche dans un véhicule, pouvant être posé sur un siège du véhicule, comprenant une surface d'assise (3) au bord arrière de laquelle, dans le sens du siège, se joint à un dossier (4), éventuellement avec un appuie-tête, ainsi qu'éventuellement avec des supports latéraux pour les oreilles, les bras et/ou le torse (5-7), et comprenant un arceau d'espacement (20) dépassant au-delà du bord avant (13) libre, dans le sens du siège, de la surface d'assise (3), pour le support du côté avant du siège pour enfant (1) à une certaine distance devant le dossier du siège du véhicule, l'arceau d'espacement (20) présentant une forme de base approximativement en forme de U avec deux branches disposées renversées l'une par rapport à l'autre et une âme centrale (22) les reliant l'une à l'autre, l'arceau d' espacement (20)étant pivotable autour d'un axe s'étendant transversalement au sens de la marche (axe de pivotement (17)), l'arceau d'espacement (20) étant fixable ou encliquetable dans plusieurs positions, de telle sorte que son mouvement dans au moins une direction de déplacement, en particulier dans une direction de pivotement, soit complètement bloqué, **caractérisé en ce que** sur l'axe de pivotement (17) est disposé un levier de réglage (25) situé approximativement opposé à la portion adjacente, de préférence approximativement horizontale de l'arceau d'espacement (20), lequel levier de réglage (25) est relié de préférence de manière rigide à l'axe de pivotement (17), notamment par soudage avec celui-ci, et lequel s'étend approximativement parallèlement à la direction du siège, de préférence approximativement horizontalement sous le côté inférieur (10) de la surface d'assise (3) et s'étend approximativement jusque sous le dossier (4), de sorte que lorsque le siège est installé, il soit aisément accessible en dessous du dossier (4) qui est alors tourné vers l'avant dans le sens de la marche.

2. Siège pour enfant selon la revendication 1, **caractérisé en ce que** les deux extrémités (21) de l'arceau d'espacement (20) sont raccordées, par exemple par soudage, à l'axe de pivotement (17) de préférence de forme tubulaire.

3. Siège pour enfant selon la revendication 1 ou 2, **caractérisé en ce que** l'arceau d'espacement (20) s'étend, vu de son (ses) point(s) de fixation ou d'articulation, en particulier de l'axe de pivotement (17), approximativement d'abord horizontalement dans le sens du siège vers l'avant.

4. Siège pour enfant selon l'une quelconque des revendications 1 à 3, **caractérisé en ce que** l'arceau d'espacement (20) est recourbé vers le haut à une certaine distance devant le bord avant (13) libre de la surface d'assise (3) du siège pour enfant (1).

5. Siège pour enfant selon l'une quelconque des revendications précédentes, **caractérisé en ce que** le levier de réglage (25) peut être fixé, dans la région de son extrémité libre (26), par rapport au châssis (2) du siège pour enfant (1).

6. Siège pour enfant selon l'une quelconque des revendications précédentes, **caractérisé en ce qu'**au moins une saillie (29) orientée approximativement radialement par rapport à son axe longitudinal est prévue sur le levier de réglage (25), pour l'engagement et/ou l'encliquetage dans un ou plusieurs évidements sur le châssis (2) du siège pour enfant (1).

7. Siège pour enfant selon l'une quelconque des revendications précédentes, **caractérisé en ce que**, sur le châssis (2) du siège pour enfant (1), est prévue une rangée d'évidements s'étendant approximativement tangentiellement à l'axe de pivotement (17) puis courbément autour de l'axe de pivotement (17), notamment pour l'engagement et/ou l'encliquetage d'au moins une saillie (29) du levier de réglage (25).

8. Siège pour enfant selon la revendication 7, **caractérisé en ce qu'**au moins une rangée d'évidements est formée par une rangée de dents (32), au moins une saillie (29) du levier de réglage (25) étant encliquetable de manière sélective dans l'un des espaces intermédiaires entre deux dents adjacentes respectives.

9. Siège pour enfant selon l'une quelconque des revendications précédentes, **caractérisé en ce qu'**au moins une saillie (29) du levier de réglage (25) est montée de manière déplaçable, de préférence approximativement dans une direction radiale par rapport à l'axe de pivotement (17) et/ou approximativement dans une direction axiale par rapport à l'axe longitudinal du levier de réglage (25).

10. Siège pour enfant selon la revendication 9, **caractérisé en ce qu'**au moins une saillie (29) du levier de réglage (25) est précontrainte par la force de ressort, de préférence dans la direction de la rangée d'évidements, notamment dans la direction approximativement radiale de l'axe de pivotement (17) vers l'extérieur et/ou approximativement dans la direction axiale de l'axe longitudinal du levier de réglage (25) de sa connexion à l'axe de pivotement (17) vers son extrémité libre (26).

11. Siège pour enfant selon l'une quelconque des revendications 9 ou 10, **caractérisé par** un élément à commande manuelle (28, 30) pour le déplacement d'au moins une saillie (29) du levier de réglage (25), de préférence contre la force d'un ressort précontraint, notamment sous la forme d'un bouton-poussoir qui est supporté à l'intérieur du levier de réglage (25) tubulaire et qui est accouplé ou connecté à au moins une saillie (29) de celui-ci.

12. Siège pour enfant selon l'une quelconque des revendications précédentes, **caractérisé en ce que**, sur le châssis (2) du siège pour enfant (1), de préférence sur un hauban (19) du celui-ci, s'étendant transversalement, dans la région du dossier (4), est disposé au moins un pied de support (35) saillant vers le bas, de préférence un pied de support (35) réglable en longueur et/ou démontable et/ou rabattable.

13. Siège pour enfant selon l'une quelconque des revendications précédentes, **caractérisé en ce que** dans la région de l'arceau d'espacement (20), de préférence latéralement à côté de sa portion s'étendant approximativement horizontalement, est ou sont prévus un ou de préférence deux éléments (16) pour l'ancrage du siège pour enfant (1) à des pattes connectées au châssis du véhicule, la distance du ou des éléments (16) pour l'ancrage du siège pour enfant (1) aux points d'ancrage du véhicule étant de préférence réglable par rapport au bord avant (13) du siège pour enfant (1), notamment par une configuration déployable de manière télescopique de la liaison (12, 14, 15) entre les éléments (16) d'ancrage et le châssis (2) du siège pour enfant (1).
